# EUROPÄISCHE PATENTSCHRIFT

(11) **EP 1 078 235 B1**
(45) Veröffentlichungstag und Bekanntmachung des Hinweises auf die Patenterteilung: **30.03.2005**
(21) Anmeldenummer: 99924909.7
(22) Anmeldetag: 07.05.1999
(51) Int. Cl.: G01M 3/00, G01M 3/04

(54) **VORRICHTUNG ZUM MONITORING VON TEMPERATURVERTEILUNGEN AUF DER BASIS VERTEILTER FASEROPTISCHER SENSORIK**
DEVICE FOR MONITORING TEMPERATURE DISTRIBUTIONS ON THE BASIS OF DISTRIBUTED FIBER-OPTIC SENSING
DISPOSITIF POUR LA SURVEILLANCE DE REPARTITIONS DE TEMPERATURE FONDEE SUR L'UTILISATION D'UN SYSTEME DE MESURE A FIBRE OPTIQUE REPARTI

(30) Priorität: 15.05.1998 DE 29808836 U; 01.07.1998 DE 29811737 U
(43) Veröffentlichungstag der Anmeldung: 28.02.2001
(73) Patentinhaber: GESO Gesellschaft für Sensorik, Geotechnischen Umweltschutz und Mathematische Modellierung mbH, Jena, 07749 Jena (DE)
(72) Erfinder: GROSSWIG, Stephan, D-07749 Jena (DE); KÜHN, Katrin, D-07743 Jena (DE)
(74) Vertreter: Meissner, Bolte & Partner
(86) Internationale Anmeldenummer: PCT/EP1999/003162
(87) Internationale Veröffentlichungsnummer: WO 1999/060360

(56) Entgegenhaltungen:
- DE-A- 19 509 129
- DE-A- 19 621 797
- DE-A- 19 702 126
- DE-U- 29 811 737
- DE-U- 29 821 223
- US-A- 5 663 490
- PATENT ABSTRACTS OF JAPAN vol. 096, no. 004, 30. April 1996 (1996-04-30) -& JP 07 317215 A (KAJIMA CORP), 5. Dezember 1995 (1995-12-05)

## Beschreibung

Die Erfindung betrifft eine Vorrichtung zum Monitoring von Temperaturverteilungen und/oder Temperaturanomalien auf der Basis verteilter faseroptischer Temperatursensorik gemäß Oberbegriff des Patentanspruchs 1.

Verteilte faseroptische Meßprinzipien nutzen die Einkopplung von Laserlichtimpulsen in einen Lichtwellenleiter und sich ergebende Streueffekte. Die Streuung des Laserlichtimpulses erfolgt an den Molekülen des Lichtwellenleiters. Ein geringer Teil des Laserlichts wird hierbei zurückgestreut. Die Intensität und die spektrale Zusammensetzung des Streulichts wird demnach durch die Moleküle im Lichtwellenleiter und deren Verhalten bestimmt.
Das rückgestreute Licht setzt sich aus verschiedenen spektralen Anteilen zusammen, die durch unterschiedliche Mechanismen der Wechselwirkung zwischen Laserlicht und den Lichtwellenleiter-Bausteinen hervorgerufen werden und damit auch unterschiedliche Informationen über den physikalischen Zustand des Lichtwellenleiters beinhalten. Damit wird aber der Lichtwellenleiter selbst zum sensitiven Element.

Die Rayleigh-Rückstreukomponente, die die gleiche Wellenlänge wie der eingekoppelte Primärlaserimpuls hat, liefert den größten Peak im Streulichspektrum und bestimmt dadurch wesentlich den exponentiellen Abfall der Intensität-Zeit-Kurve des Rückstreulichts. Da Inhomogenitäten im Lichtwellenleiter, lokale Dämpfungsänderungen, Mikrorisse, Spleißverbindungen und ähnliche eine Intensitätsänderung in der Rayleigh-Rückstreukomponente bewirken, wird diese Komponente des Streulichtspektrums zur Qualitätskontrolle von Lichtwellenleitern bzw. zur Fehlerortung verwendet.

Die Wechselwirkung des Laserlichts mit optischen Phononen im Lichtwellenleiter, d.h. die Streuung der Phononen an thermischen Gitterschwingungen im Material, ist die Ursache für die Raman-Rückstreukomponenten.

Das Raman-Streulicht setzt sich aus zwei Komponenten, der sogenannten Stokes- und der Anti-Stokes-Linie zusammen. Diese beiden Spektrallinien liegen, um einen bestimmten Betrag der Wellenzahl verschoben, symmetrisch zum Peak der Rayleigh-Rückstreuung. Während die Intensität der zu kleineren Wellenzahlen verschobenen Stokes-Linie I_{S} annähernd temperaturunabhängig ist, zeigt die zu höheren Wellenzahlen verschobene Anti-Stokes-Linie I_{A} eine deutliche Temperaturabhängigkeit, womit die Nutzung der Raman-Rückstreuung für die verteilte Temperaturmessung prädestiniert ist.

Die alleinige Betrachtung der Informationen, die im Rückstreuspektrum eines Lichtwellenleiters enthalten sind, liefert .noch keine Aussagen über die örtliche Verteilung entlang des Lichtwellenleiters. Für Rückstreumessungen zur ortsaufgelösten Erfassung der Dämpfung mittels Rayleigh-Streuung wird das sogenannte OTDR-Verfahren eingesetzt. Um eine verteilte, d.h. ortsaufgelöste Erfassung der Temperatur mittels Raman-Sensorik realisieren zu können, wird entweder auf das erwähnte OTDR-Verfahren (Optical Time Domain Reflectometry) als Zeitbereichs-Reflektometriemessung oder auf das OFTR (Optical Frequency Domain Reflectometry) als Frequenzbereichs-Reflektometrieverfahren zurückgegriffen.

Das OTDR-Verfahren basiert auf einem Puls-Echo-Prinzip, d.h. es werden aus der Laufzeitdifferenz zwischen Aussenden und Detektion der Lichtimpulse die Intensität (Streupegel) und der Entstehungsort (Streuort) des rückgestreuten Raman-Lichts bestimmt.
Bei der alternativen OFTR-Technik ist ein quasi Dauer-Betrieb des Lasers und eine schmalbandige Detektion des optischen Rückstreuverhaltens möglich. Die hierdurch gegebenen Vorzüge ermöglichen den Einsatz von preiswerteren Laserlichtquellen und kostengünstigen elektronischen Baugruppen für die Signalmittelung. Demgegenüber ist jedoch die problematischere Messung des Streulichts und eine durch die Fouriertransformation aufwendigere Signalverarbeitung mit höheren Linearitätsanforderungen zu berücksichtigen.

Aus der deutschen Offenlegungsschrift DE 195 09 129 A1 ist ein Verfahren und eine Vorrichtung zur Kontrolle und Überwachung des Zustands von Rohren, Behältern, Pipelines oder dergleichen bekannt.

Gemäß der dortigen Lehre wird davon ausgegangen, daß die in den Rohren, Behältern oder Pipelines geführten flüssigen oder gasförmigen Medien eine bezogen auf die unmittelbare Umgebung unterschiedliche Medientemperatur aufweisen. Die Umgebungstemperaturverteilung wird mindestens über Abschnitte längs und/oder umfangsmäßig und/oder im Bodenbereich nahe bei den Rohren, Behältern, Pipelines oder dergleichen, jedoch außerhalb des von diesen umschlossenen Medienraums bestimmt.

Diese Temperaturbestimmung erfolgt mit einem langgestreckten verteilten Temperatursensor in Form eines faseroptischen Sensorkabels zur Temperaturermittlung auf der Basis der oben beschriebenen Prinzipien. Bei festgestellter örtlicher Anomalie in der Temperaturverteilung wird dann auf eine Leckage geschlossen und der Ort, die Ausbreitungsrichtung sowie die Leckagemenge aus der Temperaturverteilung am jeweiligen Anomaliepunkt oder sich verändernden Ort der Anomalie bestimmt.

Vorrichtungsseitig wird nach DE 195 09 129 A1 der langgestreckte Temperatursensor, d.h. das faseroptische Sensorkabel, innerhalb eines Rohrgrabens oder einer Rohrbrücke längs des Rohrs umfangsseitig an der Außenoberfläche dieses Rohrs unmittelbar oder über einen vorgegebenen Abstand anliegend angeordnet.
Bei im wesentlichen horizontal verlaufenden Rohren, Pipelines oder dergleichen wird der langgestreckte Sensor unterhalb der Rohre fixiert. Hier können zweckmäßigerweise auch mehrere im wesentlichen parallel verlaufende Temperatursensoren bzw. - kabel parallel zur Längsachse unterhalb dieser befestigt werden, so daß die Ausbreitungsrichtung und die Ausbreitungsmenge eines leckagebedingten Medienaustritts bestimmt werden kann. An besonders gefährdeten Stellen schlägt die genannte Lösung vor, mehrere bzw. dichter angeordnete Temperatursensoren vorzusehen, um auch kleinste Leckagen mit hoher Ortsauflösung zu identifizieren.

Grundlage für die Leckageerfassung ist die Erkenntnis, daß ein austretendes Medium mit höherer oder niedrigerer Temperatur, bezogen auf die Umgebungstemperatur, zu einer lokalen Temperaturveränderung führt, welche auch die unmittelbare Umgebung des Rohr- oder Behältermantels in diese Temperaturveränderung mit einbezieht.

Durch die an sich bekannten vorteilhaft verwendbaren faseroptischen Sensorkabel kann eine Auswertung von Laufzeit und Intensität rückgestreuten Lichts bei Kabellängen von bis zu 10 km und hin zu einer Temperaturauflösung von 0,1°C erfolgen. Die gegebene Ortsauflösung liegt in Abhängigkeit von der Länge des Sensorkabels und den gewählten Verfahren zwischen 1 und 0,25 m.

Aus dem deutschen Gebrauchsmuster G 93 18 404 ist eine Einrichtung zum Bestimmen von Temperaturen an oder in ausgedehnten Meßobjekten bekannt, wobei die dort gezeigte Einrichtung eine optisch-elektronische Meßvorrichtung verwendet.

Diese bekannte Meßvorrichtung speist an mindestens einem Ende eines Lichtwellenleiters einen Laserimpuls ein und dient der Untersuchung der vom Lichtwellenleiter rückgestreuten Strahlung. Aufgrund der bereits erläuterten Wechselwirkungen läßt sich dann die Temperatur und der Ort längs des Lichtwellenleiters spektral- und laufzeitabhängig auswerten, wobei die Längenkoordinaten des Lichtwellenleiters entsprechenden Temperaturwerten zuordenbar sind.

Zur Lokalisierung von Leckagen insbesondere an Steig- oder Förderrohren von Untergrundgasspeichern sind sogenannte Flowmetermessungen bekannt geworden, bei denen das Zuströmen von Gas aus dem umgebenden Ringraum in die eigentliche Bohrung ermittelt wird. Hinterrohreffekte können mit Flow-Messungen nicht bestimmt werden, da derartige Effekte nicht zu einer Strömung von Gas innerhalb der Verrohrung führen. Die Ortsauflösung bekannter Flowmetermessungen ist von den jeweiligen diskreten Teufen bestimmt, in denen die Messung durchgeführt wird, und daher prinzipiell gering.

Weiterhin wurde bereits vorgeschlagen, in ausgewählten Teufenbereichen den Ringraum nacheinander abzupackern, um dann Druckmessungen durchzuführen. Hierbei wird jedoch nur das Zuströmen von Gas in die eigentliche Verrohrung ermittelt und die Ortsauflösung ist in Abhängigkeit von den Abpackerstufen gering. Darüber hinaus sind die Kosten derartiger Druckmessungen erheblich.

Zur Überprüfung der Dichtigkeit von Sohle und Seitenbegrenzungen von bzw. an Baugruben werden einzelne Bohrungen in die Baugrube eingebracht, um dann nacheinander die Temperatur mit einer Lanze, an deren Spitze ein Temperaturfühler befindlich ist, zu ermitteln. Mit anderen Worten wird also mit der Lanze und dem dort vorgesehenen Temperaturfühler nacheinander die Temperatur am Fußpunkt der einzelnen Bohrungen bestimmt. Die Erfassung einer zeitlichen Temperaturentwicklung ist nicht oder nur sehr schwer möglich. Der am Ende der in bekannter Weise durchgeführten Messungen erstellte flächenhafte Temperaturplot ist schwer interpretierbar, da die Temperaturwerte nicht zeitgleich aufgenommen wurden. Das Abpumpen des Wassers aus der Baugrube muß bis zum Ende der Vermessung aller Bohrungen erfolgen. Bei einer großen Baugrube führt dies zu erheblichen Pumpzeiten, wobei weiterhin der Nachteil der zitierten bekannten Lösung darin liegt, daß eine Überwachung der Vertikalabsperrung nicht möglich oder nur mit eingeschränkter Qualität realisierbar ist.

Wie eingangs erläutert, ist die faseroptische Temperatursensorik hervorragend zur Überwachung von Rohrleitungen, z.B. Produkten-Pipelines, Fernheizungsrohren und so weiter und dort insbesondere zur Leckageortung geeignet. Die zeitliche Entwicklung der Temperatur bzw. die Temperatur selbst enthält Informationen über den aktuellen Betriebszustand der überwachten Rohrleitung. Leckagen führen zu lokalen Temperaturanomalien, die sich innerhalb kurzer Zeit, d.h. wenige Minuten bis Stunden entwickeln. Diese Anomalien werden mit Hilfe der beschriebenen faseroptischen Temperatursensorik meßtechnisch erfaßt und lokalisiert. Tages- und jahreszeitliche oder witterungsbedingte Temperaturschwankungen sind immer großräumige Erscheinungen mit relativ langer Zeitkonstante. Durch die räumliche Begrenztheit und ihre zeitliche Entwicklung lassen sich Lecks im Vergleich zu den sonstigen Temperaturschwankungen erkennen und lokalisieren.
Die Ansprechzeit der verwendeten Leckortungssysteme hängt von einer Vielzahl technischer Parameter, wie der Leckrate, der Art des Produkts, dem Druck, der Temperatur, der Bodenbeschaffenheit, der Orts- und Temperaturauflösung der faseroptischen Temperaturmeßtechnik und weiteren ab. Die für die jeweilige Anwendung geforderte Ansprechzeit des Leckortungssystems bestimmt den zeitlichen Abstand τ, mit dem die Temperaturprofile bestimmt werden müssen. Da jeweils unter Berücksichtigung von Referenzwerten große Datenmengen zu verarbeiten sind und es notwendig ist, natürliche Temperaturvariationen ständig aus den aktuellen Meßwerten herauszukorrigieren, sind bekannte Auswerteverfahren sehr zeit- und/oder rechenaufwendig, so daß teilweise eine Online-Auswertung nicht oder nur eingeschränkt möglich ist.

Aus dem Vorgenannten ist es Aufgabe der Erfindung, eine Vorrichtung zum Monitoring von Temperaturverteilungen und/oder Temperaturanomalien von mit einem Ringraum umgebenen Steigoder Förderrohren für Untergrundgasspeicher mittels faseroptischer Sensorkabel zur Bestimmung der Temperaturverteilung anzugeben, mit deren Hilfe bei geringen Kosten eine hohe Ortsauflösung der jeweiligen Messungen bzw. Leckageortungen gegeben ist und die Sicherheitsrisiken beim fortzuführenden oder unterbrechungsfreien Speicherbetrieb ausschließt.

Die Lösung der Aufgabe der Erfindung erfolgt mit einer Vorrichtung gemäß den Merkmalen nach Patentanspruch 1.

Hinsichtlich der Überwachung von mit einem Ringraum umgebenen Steig- oder Förderrohren für Untergrundgasspeicher mittels faseroptischer Sensorkabel wird demnach dieses Kabel zur Bestimmung der Temperaturverteilung oder zum Feststellen von Anomalien im Inneren des Steig- oder Förderrohrs und/oder einer Hochdruckgaspipeline angeordnet. Das Sensorkabel führt über eine druckfeste Abdichtung nach außen. Weiterhin ist eine Einrichtung bzw. sind Mittel zum zeitweisen Entlasten des unter Druck stehenden Ringraums und/oder des Steigrohrs vorgesehen, um nach Aufnahme des Ausgangszustands der Temperaturverteilung entweder den unter Druck stehenden Ringraum oder den Steigrohrraum selbst zu entlasten. Dieses Druckentlasten erfolgt nur relativ kurzzeitig, so daß der Speicherbetrieb nicht nennenswert gestört wird.

Am äußeren Ende des hier eingesetzten faseroptischen Sensorkabels ist eine Meßeinheit zum Einspeisen von Strahlungsimpulsen und Empfangen von Raman-Rückstreustrahlung angeschlossen.

In einer bevorzugten Ausführungsform ist am Inneren in das Rohrinnere abzuteufenden Ende des Sensorkabels ein Gewichtskörper befestigt, um das Kabel im Rohr freihängend anordnen zu können. Ebenso ist die Anordnung einer Kabelend- oder Abschlußdose, wie z.B. in der DE 43 04 546 C1 beschrieben, möglich.

In dem Fall, wenn aus meßtechnischen oder sonstigen Gründen eine definierte Lage des Sensorkabels im Rohrinneren angestrebt wird, werden am Sensorkabel abschnittsweise federelastische Abstandshalter befestigt, welche nach dem Einbringen des Sensorkabels in das Rohrinnere eine vorgegebene oder vorgebbare Kabellage sichern.

Die Federelastizität der Abstandshalter sichert, daß das Sensorkabel auch über eine nur einen geringen Durchmesser aufweisende Druckschleuse eingebracht werden kann. Im entspannten Zustand weisen die federelastischen Abstandshalter eine Lage im wesentlichen senkrecht zur Sensorkabellängsachse auf bzw. erstrecken sich von dieser Achse in senkrechter Richtung zur Steig- oder Förderrohrinnenwandung.

Die durch die Vorrichtung ermittelten Temperaturanomalien in gemessenen Temperaturprofilen geben Hinweise auf Lecks in der Verrohrung oder auf Strömungsvorgänge im Hinterrohrbereich, d.h. im sogenannten Ringraum. Dies ist, wie mit der Vorrichtung gezeigt, auch dann überraschenderweise möglich, wenn das Sensorkabel im Förderrohr installiert wird. Abkühlungen, d.h. Temperaturveränderungen im Ringraum oder der Zementation, wirken über Wärmeleitungsvorgänge in das Förderrohr zurück und lassen sich mit der faseroptischen Temperatursensorik meßtechnisch erfassen, mit dem vorstehend beschriebenen Verfahren auswerten und lokalisieren.

Auswerteseitig wird konkret eine Differenzkurve der Temperaturprofile vor und nach der vorzunehmenden Ringraumentspannung bestimmt, wobei diese Kurve Anomalien mit verschiedenen Vorzeichen aufzeigt. Negative Temperaturdifferenzen lassen auf undichte Rohrmuffen schließen. Positive Temperaturdifferenzen und -anomalien hingegen zeigten den Zustrom wärmeren Gases im Hinterrohrbereich aufgrund einer schadhaften Zementation bzw. Umhüllung.

Mit Hilfe der beschriebenen Vorrichtung ist also eine zeitgleiche, verteilte Messung der Temperatur-Teufen-Profile längs der gesamten Speicherbohrung bei Erdgasspeichern mit hoher Orts- und Temperaturauflösung bei großer Sensorkabellänge möglich. Der erfaßbare Temperaturbereich liegt zwischen -50°C bis hin zu über 350°C, bei Drücken bis zu 75 MPa.

Eine Beeinträchtigung des Speicherbetriebs durch die erfindungsgemäße Vorrichtung ist ausgeschlossen. Dadurch, daß das Sensorkabel keinerlei potential- oder stromführende Leitungen aufweist, ist Explosionssicherheit von vornherein gegeben. Die eingesetzten faseroptischen Sensorkabel der Vorrichtung sind mechanisch und chemisch außerordentlich widerstandsfähig und besitzen eine große Lebensdauer. Die faseroptischen Sensorkabel können ständig im Rohrinneren verbleiben und ermöglichen Stichtagsmessungen sowie eine Dauerüberwachung durch Einbindung in EDV-Leitwarten.

Alternativ ist eine temporäre Installation des Sensorkabels in die Bohrung eines Gasspeichers möglich, wobei hier das Sensorkabel in die unter Druck stehende Bohrung mittels Druckschleusen für die Abdichtung der Bohrung während des Einbaus des Kabels und während der eigentlichen Messungen eingebracht wird.
Auch hier wird nach Aufnahme eines Ausgangstemperaturzustands der unter Druck stehende Ringraum oder das Steigrohr entlastet und eine erneute Temperaturermittlung vorgenommen. Messungen sind sowohl an Aquiferspeichern als auch in einer Kaverne oder in ausgebeuteten Lagerstätten zur Speicherung von Gas möglich.

Es hat sich gezeigt, daß mit der vorgeschlagenen Vorrichtung eine örtliche Zuordnung von Lecks bis hin zu 0,25 m Genauigkeit erreicht werden kann, so daß anhand eines gegebenen Verrohrungsschemas eine exakte Bestimmung defekter oder undichter Teile erfolgen kann. Durch zusätzliche Sensorik in der Kabelabschluß- oder Kabelenddose können weitere physikalische Parameter erfaßt werden.
Bei Anordnung eines Geophons in oder an der Dose kann in vorteilhafter Weise der Gas/Wasser-Kontakt beim Einfahren des Sensorkabels festgestellt und ein unerwünschtes Schwingen des Kabelstrangs mit der möglichen Folge von Beschädigungen aufgrund plötzlich geänderter Druckverhältnisse wirksam verhindert werden.

Beim Verlegen des Sensorkabels im Inneren einer Hochdruckgaspipeline, die z.B. durch dichtbesiedeltes Gebiet führt, wo Erdarbeiten nicht oder nur erschwert möglich sind, wird ein Verbundkabel mit einer Vielzahl von Lichtwellenleitern benutzt, um neben der Leckageortung eine Datenübertragung, insbesondere für Telekommunikationszwecke zu erreichen.

Die Erfindung sei nachstehend anhand eines Ausführungsbeispiels sowie unter Zuhilfenahme einer Figur näher erläutert.

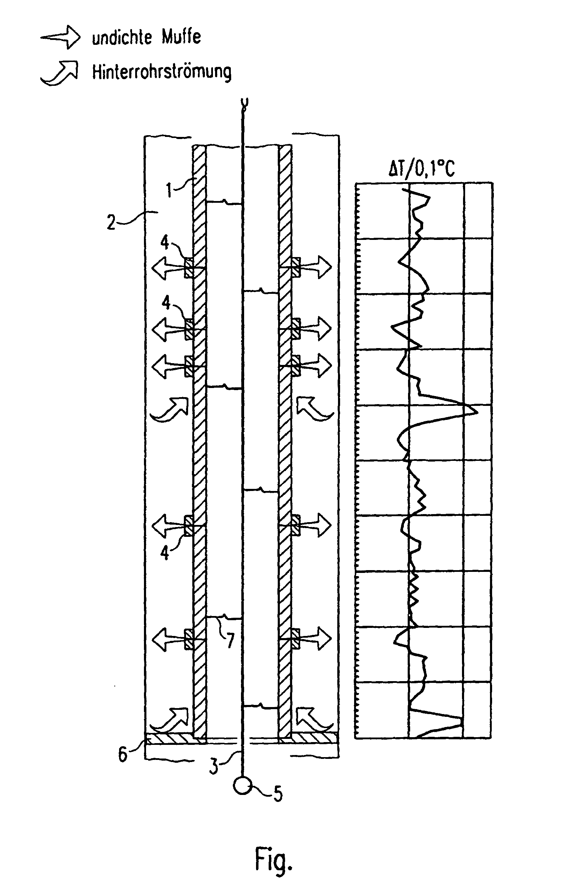

Hierbei zeigt die Figur eine prinzipielle Ausbildung eines Steig- oder Förderrohrs für einen Untergrundgasspeicher mit Ringmuffen und Hinterrohrströmung sowie eine ermittelte Differenzkurve der Temperaturprofile vor und nach der Ringraumentspannung.

Die in der Figur gezeigte Vorrichtung zur Leckageüberwachung eines Steig- oder Förderrohrs 1 zeigt ein solches Rohr, welches mit einem Ringraum 2 oder einer Zementation umgeben ist.

Im Inneren des Steig- oder Förderrohrs 1 ist ein faseroptisches Sensorkabel 3 eingebracht bzw. angeordnet. Dieses Sensorkabel 3 weist ein äußeres Ende auf, welches über eine nicht gezeigte druckfeste Abdichtung geführt wird.

Das Steig- oder Förderrohr 1 besteht aus einzelnen, durch Muffen 4 verbundenen Abschnitten. Das erwähnte äußere Ende des faseroptischen Sensorkabels 3 führt zu einer nicht dargestellten Meßeinheit zum Einspeisen von Strahlungsimpulsen und Empfangen von Rückstreustrahlung, insbesondere Raman-Rückstreuung, so daß das Temperaturprofil längs des Sensorkabels ermittelbar ist.

Am inneren Ende des Sensorkabels 3 ist ein Gewichtskörper und/oder eine Kabelabschlußdose 5 zum leichteren Einbringen des Kabels sowie gegen den im Inneren des Rohrs wirkenden Druck angebracht. Ein Packer 6 dichtet den Ringraum zum darunterliegenden Speicher ab.

Am Sensorkabel 3 können Abstandshalter 7 befestigt sein, welche sich nach Einbringen des Sensorkabels in das Rohrinnere quasi aufspreizen oder entfalten, so daß das Kabel bezogen auf das Rohr 1 eine definierte Lage einnimmt. Hierfür sind die Abstandshalter 7 federelastisch, wobei sich im entspannten Zustand die Abstandshalter im wesentlichen senkrecht von der Sensorkabel-Längsachse hin zur Rohrinnenwandung erstrecken.

Die im rechten Teil der Figur dargestellte Differenzkurve der Temperaturprofile vor und nach der Ringraumentlastung zeigt die hohe Empfindlichkeit der faseroptischen Temperaturmeßtechnik und die nachweisbaren Anomalien in der Temperaturverteilung mit verschiedenen Vorzeichen.

Negative Temperaturdifferenzen lassen undichte Muffen 4 erkennen. Positive Temperaturanomalien hingegen offenbaren den Zustrom wärmeren Gases im Hinterrohrbereich aufgrund einer schadhaften Zementation.

Mit Hilfe der figürlich dargestellten und beschriebenen Vorrichtung kann nicht nur eine entsprechend gegebenen Prüfkriterien vorgenommene Leckagekontrolle durchgeführt werden, sondern es ist auch eine Überwachung der Langzeittemperaturentwicklung und eine Erfassung weiterer Parameter untertägiger Gasspeicher möglich. Die erhaltenen thermodynamischen Informationen liefern in Verbindung mit den geologischen Gegebenheiten des Untergrunds ein detailliertes Bild der Vorgänge im Gasspeicher. Durch Bestimmung des Temperaturprofils auch in der Speicherbohrung läßt sich aus Kenntnis des Drucks am Sondenkopf und unter Nutzung der thermodynamischen Zustandsgleichung für das Gas aus dem Temperaturprofil das Druckprofil im Speicher berechnen.

Die in der Figur dargestellten Abkühlungen im Ringraum oder der Zementation wirken über Wärmeleitungsvorgänge in das Steigoder Förderrohr zurück und lassen sich mit der faseroptischen Temperatursensorik unter Nutzung des Sensorkabels erfassen und lokalisieren.

Es hat sich bei Versuchen gezeigt, daß es möglich ist, eine temporäre Installation des Sensorkabels in der Bohrung eines Gasspeichers vorzunehmen, auch dann, wenn die Bohrung selbst unter Druck steht. Hierfür wird mittels Druckschleusen eine Abdichtung der Bohrung während des Kabeleinbaus und während der Zeit der Temperaturmessungen vorgenommen. Nach einer Aufnahme des Ausgangszustands der Temperaturverteilung wird dann entweder der unter Druck stehende Ringraum oder das Steigrohr entlastet. Danach erfolgt eine erneute Messung der Temperaturverteilung. Aus den Temperaturdifferenzen lassen sich dann Undichtheiten und defekte Teile unter Beachtung des bekannten Verrohrungsschemas ermitteln. Es konnte nachgewiesen werden, daß undichte Muffen zu Temperaturabnahmen von mehreren Grad führen. Wie dargestellt, konnte zeitlich versetzt ein etwas tiefer liegender Packer, der den Ringraum gegen den Gasspeicher abdichtet, als defekt lokalisiert werden.

Mit der vorstehend anhand der Figur beschriebenen Vorrichtung gelingt es demnach, Leckagen insbesondere an Steig- oder Förderrohren für Untergrundgasspeicher in besonders kostengünstiger Weise zu ermitteln und/oder eine Langzeitüberwachung untertägiger Erdgasspeicher, aber auch Speicher von Druckluft vorzunehmen. Dadurch, daß die eingesetzten faseroptischen Sensorkabel potentialfrei sind, werden Gefährdungen ausgeschlossen und es ist die gewünschte Explosionssicherheit gegeben.
Die von der Meßeinheit zum Einspeisen von Strahlungsimpulsen und Empfangen von Raman-Rückstreustrahlung erhaltenen Ergebnisse können online und mobil ausgewertet oder in eine Leitwarte zur Zustandsüberwachung eingebunden werden.

### Bezugszeichenaufstellung

- 1: Steig- oder Förderrohr
- 2: Ringraum
- 3: faseroptisches Sensorkabel
- 4: Muffe
- 5: Gewichtskörper/Kabelabschlußdose
- 6: Packer
- 7: Abstandshalter

## Patentansprüche

1. Vorrichtung zum, auch permanenten und automatischen,
Monitoring von Temperaturverteilungen und/oder Temperaturanomalien auf der Basis verteilter faseroptischer Temperatursensorik von mit einem Ringraum umgebenen Steig- oder Förderrohren (1) für Untergrundgasspeicher mittels faseroptischer Sensorkabel (3) zur Bestimmung der Temperaturverteilung oder der Temperaturanomalien,
**dadurch gekennzeichnet, dass**
das faseroptische Sensorkabel (3) im Inneren des Steig- oder Förderrohrs (1) angeordnet ist und über eine druckfeste Abdichtung nach außen führt, wobei weiterhin eine Einrichtung zum zeitweisen Entlasten des unter Druck stehenden Ringraums (2) und/oder des Steigrohrs (1) vorgesehen ist, sowie das äußere Ende des faseroptischen Sensorkabels (3) an eine Meßeinheit zum Einspeisen von Strahlungsimpulsen und Empfangen von Rückstreustrahlung angeschlossen ist.

2. Vorrichtung nach Anspruch 1,
**dadurch gekennzeichnet, dass**
am inneren Ende des Sensorkabels (3) ein Gewichtskörper und/oder eine Kabelabschlussdose (5) befestigt ist.

3. Vorrichtung nach Anspruch 2,
**dadurch gekennzeichnet, dass**
das Sensorkabel (3) im Rohrinnern freihängend angeordnet ist.

4. Vorrichtung nach einem der Ansprüche 1 bis 3,
**dadurch gekennzeichnet, dass**
am Sensorkabel (3) Abstandshalter (7) befestigt sind, welche nach Einbringen des Sensorkabels (3) in das Rohrinnere eine vorgegebene Sensorkabellage sichern.

5. Vorrichtung nach Anspruch 4,
**dadurch gekennzeichnet, dass**
die Abstandshalter (7) federelastisch ausgebildet sind und im entspannten Zustand sich im wesentlichen senkrecht von der Sensorkabel-Längsachse erstrecken.

6. Vorrichtung nach Anspruch 2,
**dadurch gekennzeichnet, dass**
in oder an der Kabelabschlussdose (5) weitere Sensoren zur Erfassung von Druck, Temperatur und/oder Umgebungsleitfähigkeit angeordnet sind.

7. Vorrichtung nach Anspruch 2 oder 6,
**dadurch gekennzeichnet, dass**
die Kabelabschlussdose (5) aus einer Mehrkammeranordnung mit druckdichten und/oder zur Umgebung gefluteten bzw. offenen Bereichen besteht.

8. Vorrichtung nach Anspruch 2, 4 oder 7,
**dadurch gekennzeichnet, dass**
die Kabelabschlussdose (5) ein vorzugsweise faseroptisches Geophon, insbesondere zur Bestimmung des Gas/Wasser-Kontakts beim Einfahren aufweist.

## Claims

1. A device for even permanently and automatically monitoring temperature distributions and/or temperature irregularities on the basis of distributed fiber-optic sensing of riser or conveying tubes (1) surrounded by an annular chamber, for underground gas reservoirs, by means of fiber-optic sensor cables (3) for determining the temperature distribution od temperature irregularities,
**characterized in that**
the fiber-optic sensor cable (3) is arranged inside the riser or conveying tube (1) and leads to the outside via a pressure-proof seal, wherein moreover a means for temporarily relieving the pressurized annular chamber (2) and/or the riser tube (1) being provided, and the outer end of the fiber-optic sensor cable (3) being connected to a measurement unit for feeding radiation pulses and receiving backscattered radiation.

2. The device according to claim 1,
**characterized in that**
a weight body and/or a cable termination (5) is attached to the inner end of the sensor cable (3).

3. The device according to claim 2,
**characterized in that**
the sensor cable (3) is arranged freely suspended in the interior of the tube.

4. The device according to any one of claims 1 through 3,
**characterized in that**
spacers (7) are attached to the sensor cable (3) which maintain a predetermined sensor cable position after introducing the sensor cable (3) into the interior of the tube.

5. The device according to claim 4,
**characterized in that**
the spacers (7) are of a resilient configuration and extend essentially perpendicular from the longitudinal sensor cable axis when in the relieved state.

6. The device according to claim 2,
**characterized in that**
further sensors are arranged within or at the cable termination (5) for sensing pressure, temperature and/or environmental conductivity.

7. The device according to claim 2 or 6,
**characterized in that**
the cable termination (5) consists of a multiple chamber arrangement with zones that are pressure-tight and/or flooded or open towards the environment.

8. The device according to claims 2, 4 or 7,
**characterized in that**
the cable termination (5) comprises a preferably fiber-optic geophone for in particular determining the gas/water contact during drive-in.

## Revendications

1. Dispositif pour la surveillance, également permanente et automatique, de répartition de température et/ou d'anomalies de température fondée sur l'utilisation d'un système réparti de capteurs de température à fibre optique, dans des tubes montants ou des tubes de convoyage (1) entourés par un espace annulaire pour un stockage de gaz souterrain, au moyen de câbles de détection à fibre optique (3) pour déterminer la répartition de température ou les anomalies de température,
**caractérisé en ce que**
le câble de détection à fibre optique (3) est agencé à l'intérieur du tube montant ou du tube de convoyage (1), et mène à l'extérieur via un étanchement résistant à la pression, dans lequel est encore prévu un moyen pour décharger temporairement l'espace annulaire (2) sous pression et/ou le tube montant, et l'extrémité extérieure du câble de détection à fibre optique (3) est raccordé à une unité de mesure pour l'injection d'impulsions de rayonnement et pour la réception d'un rayonnement rétrodiffusé.

2. Dispositif selon la revendication 1, **caractérisé en ce qu'**un poids et/ou une prise de terminaison de câble (5) est fixé(e) à l'extrémité intérieure du câble de détection (3).

3. Dispositif selon la revendication 2, **caractérisé en ce que** le câble de détection (3) est agencé en suspension libre dans l'intérieur du tube.

4. Dispositif selon l'une des revendications 1 à 3, **caractérisé en ce que** des éléments écarteurs (7) sont fixés sur le câble de détection (3), lesquels assurent au câble de détection une position prédéterminée après introduction du câble de détection (3) dans l'intérieur du tube.

5. Dispositif selon la revendication 4, **caractérisé en ce que** les éléments écarteurs (7) sont réalisés avec élasticité analogue à celle d'un ressort, et **en ce qu'**à l'état détendu, ils s'étendent essentiellement perpendiculairement de l'axe longitudinal du câble de détection.

6. Dispositif selon la revendication 2, **caractérisé en ce que** d'autres détecteurs pour la détermination de la pression, de la température et/ou de la conductivité environnante sont agencés dans la prise de terminaison de câble (5) ou sur celle-ci.

7. Dispositif selon l'une ou l'autre des revendications 2 et 6, **caractérisé en ce que** la prise de terminaison de câble (5) est constituée d'un agencement à plusieurs chambres avec des zones étanches à la pression et/ou des zones inondées ou ouvertes vers l'environnement.

8. Dispositif selon l'une des revendications 2, 4 est 7, **caractérisé en ce que** la prise de terminaison de câble (5) comprend un géophone, de préférence à fibre optique, en particulier pour la détermination du contact gaz/eau lors de l'introduction.
